# EUROPÄISCHE PATENTSCHRIFT

(11) **EP 3 909 113 B1**
(45) Veröffentlichungstag und Bekanntmachung des Hinweises auf die Patenterteilung: **26.04.2023**
(21) Anmeldenummer: 19710348.4
(22) Anmeldetag: 04.03.2019
(51) Int. Cl.: H02K 9/22, H02K 15/02, H02K 1/20

(54) **ELEKTROBLECH FÜR EINE ELEKTRISCHE MASCHINE UND HERSTELLUNGSVERFAHREN FÜR EIN ELEKTROBLECH**
ELECTRICAL SHEET FOR AN ELECTRICAL MACHINE AND METHOD FOR PRODUCING AN ELECTRICAL SHEET
TÔLE ÉLECTRIQUE POUR UNE MACHINE ÉLECTRIQUE ET PROCÉDÉ DE FABRICATION D'UNE TÔLE ÉLECTRIQUE

(43) Veröffentlichungstag der Anmeldung: 17.11.2021
(73) Patentinhaber: Siemens Aktiengesellschaft, 80333 München (DE)
(72) Erfinder: SCHUH, Carsten, 85598 Baldham (DE); VOLLMER, Rolf, 36129 Gersfeld (DE)
(74) Vertreter: Siemens Patent Attorneys
(86) Internationale Anmeldenummer: PCT/EP2019/055297
(87) Internationale Veröffentlichungsnummer: WO 2020/177853

(56) Entgegenhaltungen:
- DE-A1-102011 109 129
- DE-A1-102014 004 613
- DE-B4-102014 004 613

## Beschreibung

Die Erfindung betrifft ein Elektroblech für eine elektrische Maschine sowie ein Verfahren zur Herstellung eines solchen Elektroblechs. Ferner betrifft die Erfindung ein Blechpaket und eine Maschinenkomponente für eine elektrische Maschine. DE 10 2014 004 613 A1 offenbart den Oberbegriff des Anspruchs 1. DE 10 2011 109 129 A1 offenbart die Fertigung eines aus abwechselnd magnetisch und elektrisch leitenden Schichten aufgebauten Magnetkerns, der durch Siebdruck hergestellt ist.

In Wicklungen einer elektrischen Maschine, im Falle eines Motors oder Generators Wicklungen der Elektromagnete, entsteht beim Betrieb der elektrischen Maschine Wärme. Die Wärme wird in bekannten elektrischen Maschinen beispielsweise an ein Kühlelement abgegeben. In verschiedenen elektrischen Maschinen, beispielsweise Motoren oder Generatoren, können die Wicklungen in Kontakt zu einer Maschinenkomponente der elektrischen Maschine stehen, welche aus Elektroblech gefertigt ist, beispielsweise einem Stator oder einem Rotor der Maschine. Aufgrund der erforderlichen magnetischen Eigenschaften solcher Maschinenkomponenten sind diese häufig aus einem Material, insbesondere ferromagnetischen Material, mit relativ geringer Wärmeleitfähigkeit hergestellt. Daher kann der Abtransport der durch die Wicklungen entstehenden Wärme begrenzt, eine entsprechende Kühlung der elektrischen Maschine in ihrer Effizienz entsprechend beschränkt sein.

Es ist daher eine Aufgabe der vorliegenden Erfindung, ein verbessertes Konzept für ein Elektroblech für eine elektrische Maschine anzugeben, die einen verbesserten Wärmetransport von einer Wärmequelle der elektrischen Maschine zu einer Wärmesenke der elektrischen Maschine ermöglicht. Erfindungsgemäß wird diese Aufgabe gelöst durch ein Elektroblech, ein Blechpaket, eine Maschinenkomponente sowie ein Verfahren gemäß den unabhängigen Patentansprüchen. Vorteilhafte Ausgestaltungen und Weiterführungen sind Gegenstand der abhängigen Ansprüche.

Das verbesserte Konzept beruht auf der Idee, in einem doppelwandigen Elektroblech einen Innenraum vorzusehen, welcher mit einem Fluid befüllt ist, um eine Wärmeleitfähigkeit des gesamten Elektroblechs zu verbessern.

Gemäß einem ersten Aspekt des verbesserten Konzepts wird ein Elektroblech für eine elektrische Maschine angegeben, wobei das Elektroblech zwei Platten aus einem ferromagnetischen Material aufweist, welche parallel zueinander und in einem Abstand zueinander angeordnet sind. Die Platten sind dabei an jeweiligen Rändern der Platten umlaufend fluiddicht, insbesondere flüssigkeits- und gasdicht, miteinander verbunden. In einem durch den Abstand gebildeten Innenraum, insbesondere Hohlraum, zwischen den beiden Platten befindet sich ein Fluid.

Durch die umlaufende Verbindung der Platten an ihren Rändern wird der Abstand zwischen den Platten an den Rändern vollständig fluiddicht verschlossen. Insbesondere ist der Hohlraum oder Innenraum gegenüber einer Umgebung des Elektroblechs vollständig fluiddicht abgeschlossen.

Die Verbindung der Platten an ihren Rändern miteinander ist insbesondere eine stoffschlüssige Verbindung, beispielsweise befinden sich zwischen den beiden Platten an deren Rändern eine oder mehrere Randstrukturen, die jeweils stoffschlüssig sowohl mit der ersten als auch mit der zweiten Platte verbunden sind.

Das ferromagnetische Material kann beispielsweise einen Stahl, Eisen, eine Eisenlegierung, insbesondere eine Eisen-Silizium-Legierung, oder eine andere für Elektrobleche geeignete Metalllegierung beinhalten.

Die beiden Platten sind beispielsweise im Wesentlichen kongruent oder kongruent, sodass ihre Ränder übereinander oder im Wesentlichen übereinander liegen.

Das Fluid kann beispielsweise eine Flüssigkeit und/oder ein Gas enthalten. Beispielsweise kann das Fluid Wasser und/oder Wasserdampf enthalten.

Insbesondere ist das Fluid bei gegebenen Bedingungen im Innenraum, insbesondere bei gegebenem Innendruck im Innenraum, bei einer ersten Temperatur, welche beispielsweise einer Temperatur der Wärmequelle, beispielsweise einer Wicklung der elektrischen Maschine, im Betrieb der elektrischen Maschine entspricht, gasförmig und bei einer zweiten Temperatur, beispielsweise einer Temperatur einer Wärmesenke, etwa einem Kühlelement der elektrischen Maschine, flüssig.

Mit Vorteil kann das Fluid also, soweit es sich in einem ersten Bereich des Innenraums befindet, welcher eine erhöhte Temperatur aufweist, beispielsweise einem ersten Bereich in der Nähe der Wärmequelle, verdampfen und dabei Energie aus seiner Umgebung in Form von Wärme aufnehmen. In der Gasphase, also insbesondere als Dampf, kann das Fluid dann beispielsweise in einen zweiten Bereich des Elektroblechs strömen, wo es abgekühlt wird, beispielsweise durch eine Wärmesenke. Dementsprechend kann das Fluid in dem zweiten Bereich kondensieren und die zuvor aufgenommene Wärme wieder abgeben, beispielsweise an die Wärmesenke. Das kondensierte Fluid kann dann beispielsweise in den ersten Bereich zurückfließen oder strömen.

Durch die Struktur des Elektroblechs gemäß dem verbesserten Konzept, insbesondere den Innenraum mit dem Fluid, kann eine Wärmeleitfähigkeit des Elektroblechs als Gesamtsystem entscheidend verbessert werden. Dazu bedient sich das verbesserte Konzept physikalischen Prinzipien, wie sie beispielsweise auch Ausführungsformen von Heatpipes zugrunde liegen können. Anders ausgedrückt stellt das Elektroblech selbst eine Heatpipe dar.

Während typische Materialien, die für konventionelle Elektrobleche eingesetzt werden, beispielsweise Eisenstähle, eine relativ schlechte Wärmeleitfähigkeit, im Fall von Eisen beispielsweise 20 bis 80 W/(K*m), aufweisen, hat sich gezeigt, dass für ein Elektroblech gemäß dem verbesserten Konzept Werte über 1000 W/(K*m) erzielt werden können.

Es kann daher eine deutlich erhöhte Wärmeaustauschrate erzielt werden. Dies hat zur Folge, dass die elektrische Leistung der elektrischen Maschine entscheidend erhöht werden kann ohne gegebenenfalls zulässige Grenzwerte bezüglich der Wärmeentwicklung in der Maschine zu überschreiten. Bei gleicher Leistung kann die elektrische Maschine dagegen kompakter, kleiner, insbesondere kürzer, konstruiert und gebaut werden. Damit wird die Maschine leichter und Herstellungskosten können eingespart werden.

Gemäß zumindest einer Ausführungsform des Elektroblechs haben die Platten eine ringförmige Form, insbesondere Grundform.

Gemäß zumindest einer Ausführungsform ist ein Druck in dem Innenraum des Elektroblechs geringer als ein Umgebungsdruck, insbesondere Umgebungsluftdruck, des Elektroblechs.

Mit anderen Worten herrscht im Innenraum des Elektroblechs ein Unterdruck, beispielsweise ein Vakuum.

Der Wert des Drucks in dem Innenraum ist insbesondere abgestimmt auf einen Siedepunkt des Fluids und die entsprechenden Betriebstemperaturen, also die Temperaturen der Wärmequelle und der Wärmesenke, im Betrieb der elektrischen Maschine. Insbesondere ist der Druck im Innenraum derart gewählt, dass das Fluid bei einer typischen Temperatur der Wärmequelle gasförmig und bei einer typischen Temperatur der Wärmesenke flüssig ist.

In verschiedenen Ausführungsformen ist der Druck im Innenraum kleiner oder gleich 500 hPa, insbesondere kleiner oder gleich 100 hPa, beispielsweise kleiner oder gleich 50 hPa. Insbesondere liegt der Druck in dem Innenraum in einem Bereich von 10 bis 100 hPa, insbesondere bei 50 hPa oder ungefähr 50 hPa. Durch die Verringerung des Drucks im Innenraum im Vergleich zum Umgebungsdruck, insbesondere im Vergleich zum Normalluftdruck, kann ein niedrigerer Siedepunkt des Fluids erzielt werden, was eine effiziente Kühlung auch bei niedrigeren absoluten Temperaturen der Wärmequelle ermöglicht. Ein weiterer Vorteil ist, dass Wasser als Fluid eingesetzt werden kann.

Erfindungsgemäß weist das Elektroblech in dem Innenraum eine oder mehrere Stützstrukturen auf, welche die Platten abstützen, um den Abstand zu gewährleisten.

Insbesondere liegen die Platten auf den Stützstrukturen auf, sodass diese abgestützt werden.

In verschiedenen Ausführungsformen sind die Strukturen stoffschlüssig mit wenigstens einer der Platten, insbesondere mit beiden Platten, verbunden.

In verschiedenen Ausführungsformen bestehen die Stützstrukturen aus demselben Material wie die Platten oder weisen dieses Material auf.

Durch die Stützstrukturen wird es möglich, den Druck im Innenraum des Elektroblechs besonders niedrig zu wählen, insbesondere ohne, dass eine Verformung der Platten zu befürchten ist. Ein weiterer Vorteil der Stützstrukturen ist, dass eine Anordnung und/oder eine Form oder eine Oberflächenstruktur der Stützstrukturen einen Transport des Fluids unterstützen kann, insbesondere einen Transport des Fluids, wenn es sich im flüssigen Zustand befindet. Eine Oberfläche, insbesondere eine poröse oder raue Oberfläche, der Stützstrukturen kann dabei aufgrund auftretender Kohäsionskräfte, Adhäsionskräfte und/oder Kapillarkräfte effektiv wie ein Kapillarsystem wirken beziehungsweise wie ein Docht, der das flüssige Fluid von dem zweiten Bereich zurück zu dem ersten Bereich transportieren kann.

Je nach Anordnung und Form der Stützstrukturen können aber auch Zwischenräume zwischen den Strukturen derart klein gewählt werden, dass diese als Kapillarsystem wirken. Dadurch wird eine effizientere Kühlung beziehungsweise ein effizienterer Wärmeabtransport möglich, da eine Bereitstellung des flüssigen Fluids bei der Wärmequelle schneller und zuverlässiger erfolgen kann.

Gemäß zumindest einer Ausführungsform ist der Innenraum derart ausgestaltet, dass sich das Fluid, wenn es sich in einem gasförmigen Zustand befindet, von einem ersten Bereich des Innenraums zu einem zweiten Bereich des Innenraums strömen kann.

Der erste Bereich ist der Wärmequelle, beispielsweise Wicklungen der elektrischen Maschine, zugewandt. Beispielsweise kann eine Außenwand des Elektroblechs, welche dem ersten Bereich des Innenraums entspricht oder gegenüberliegt, mit der Wärmequelle in Kontakt stehen.

Insbesondere können durch die Ausgestaltung des Innenraums, insbesondere der Form und Anordnung der Stützstrukturen, ein Kanal oder mehrere Kanäle oder ein Netzwerk aus Kanälen definiert werden, entlang derer sich das gasförmige, insbesondere verdampfte, Fluid bewegen kann.

Nachdem das Fluid durch Verdampfung Wärme von der Wärmequelle aufgenommen hat, kann es in solchen Ausführungsformen besonders gut abtransportiert und zu dem zweiten Bereich transportiert werden.

In verschiedenen Ausführungsformen ist der Innenraum wenigstens teilweise hohl.

In verschiedenen Ausführungsformen sind der erste und der zweite Bereich durch Kanäle und/oder Hohlräume miteinander verbunden. Insbesondere sind die Stützstrukturen derart angeordnet, dass sie einen Strömungspfad zwischen dem ersten Bereich und dem zweiten Bereich für das gasförmige Fluid nicht vollständig blockieren.

In verschiedenen Ausführungsformen ist der Innenraum derart ausgestaltet, dass das Fluid, wenn es sich in einem flüssigen Zustand befindet, von dem zweiten Bereich zu dem ersten Bereich strömen kann.

In verschiedenen Ausführungsformen wird das Strömen des flüssigen Fluids von dem zweiten zu dem ersten Bereich durch eine Oberflächenrauigkeit im Innenraum, insbesondere eine Oberflächenrauigkeit der Platten im Innenraum und/oder der Stützstrukturen und/oder durch ein Kapillarsystem, insbesondere zusätzliches Kapillarsystem, unterstützt.

Gemäß zumindest einer Ausführungsform enthält das Elektroblech in dem Innenraum ein Kapillarsystem, welches zwischen dem ersten und dem zweiten Bereich angeordnet ist.

Der Begriff Kapillarsystem ist dabei derart zu verstehen, dass er Strukturen oder Elemente aufweist, bezüglich derer das Fluid im flüssigen Zustand einen Kapillareffekt zeigt. Insbesondere ist mit dem Begriff Kapillarsystem nicht notwendigerweise ein System aus Röhrchen oder dergleichen zu verstehen.

Durch das Kapillarsystem kann das Strömen des Fluids im flüssigen Zustand von dem zweiten Bereich zu dem ersten Bereich unterstützt werden. Dadurch ist mehr Flüssigkeit zur Wärmeaufnahme in dem ersten Bereich verfügbar beziehungsweise schneller verfügbar, was eine effizientere oder effektivere Kühlung ermöglicht.

In verschiedenen Ausführungsformen beinhaltet das Kapillarsystem ein Metallgeflecht oder ein poröses, in den Innenraum gefülltes Material.

In verschiedenen Ausführungsformen des Elektroblechs beinhaltet das Fluid Wasser oder besteht aus Wasser.

Die Verwendung von Wasser ist vorteilhaft aufgrund der Verfügbarkeit, der geringen Kosten und der Ungefährlichkeit von Wasser. Zudem ist ein vorteilhafter Druck in dem Innenraum für den Fall von Wasser technisch ohne Weiteres erreichbar.

Gemäß zumindest einer Ausführungsform sind die Platten ringförmig ausgebildet und weisen zur Aufnahme von Leiterwicklungen der elektrischen Maschine Nuten auf.

Ringförmig ist hierbei nicht notwendigerweise im mathematisch exakten Sinn zu verstehen, insbesondere nicht notwendigerweise als exakt kreisringförmig. Ringförmig kann beispielsweise derart verstanden werden, dass die Platten zwei konzentrische Ränder, insbesondere einen Innenrand und einen Außenrand, aufweisen und beispielsweise drehsymmetrisch oder rotationssymmetrisch ausgebildet sind.

Die Platten können beispielsweise einen kreisförmigen Innen- oder Außenrand aufweisen.

Die Nuten zur Aufnahme der Leiterwicklungen können beispielsweise innen oder außen an den Platten, insbesondere an Innenrändern oder an Außenrändern der Platten, gebildet sein.

Innen und außen kann dabei als radiale Angabe verstanden werden, nicht mit Bezug auf den Innenraum des Elektroblechs.

Der erste Bereich des Innenraums entspricht beispielsweise einem Bereich des Elektroblechs, an dem die Nuten gebildet sind.

Ein derartig ausgebildetes Elektroblech kann beispielsweise für ein Blechpaket eines Stators oder Rotors einer elektrischen Maschine verwendet werden.

Gemäß zumindest einer Ausführungsform ist eine äußere Oberfläche des Elektroblechs mit einem elektrisch isolierenden Material beschichtet, insbesondere vollständig beschichtet.

Durch die elektrisch isolierende Beschichtung können in gestapelten Blechen oder Blechpaketen Wirbelströme vermieden oder reduziert werden.

Gemäß einem weiteren unabhängigen Aspekt des verbesserten Konzepts wird ein Blechpaket für eine elektrische Maschine angegeben, welches aufeinander gestapelte Elektrobleche beinhaltet. Wenigstens eines der Elektrobleche ist gemäß dem verbesserten Konzept ausgebildet.

Das Blechpaket kann beispielsweise einen Stapel aus einer Vielzahl, insbesondere mehreren zehn bis zu mehreren hunderttausenden, von Elektroblechen aufweisen. Dabei kann jedes der Elektrobleche gemäß dem verbesserten Konzept ausgebildet sein. Alternativ ist ein bestimmter Anteil der Elektrobleche gemäß dem verbesserten Konzept ausgebildet. Diejenigen Elektrobleche, die nach dem verbesserten Konzept ausgebildet sind, können beispielsweise in einem regelmäßigen Abstand innerhalb des Blechstapels angeordnet sein.

Gemäß einem weiteren unabhängigen Aspekt des verbesserten Konzepts wird eine Maschinenkomponente, insbesondere eine Statorvorrichtung oder Rotorvorrichtung, für eine elektrische Maschine angegeben. Die Maschinenkomponente weist ein Elektroblech, insbesondere ein Blechpaket, gemäß dem verbesserten Konzept auf. Die Maschinenkomponente weist außerdem ein Kühlelement auf, welches mit dem Elektroblech in Verbindung steht, sodass ein Wärmeaustausch zwischen dem Elektroblech und dem Kühlelement stattfinden kann.

Das Kühlelement kann beispielsweise als Kühlmantel ausgebildet sein, welches den Blechstapel umgibt, beispielsweise an einer radialen Außenseite der Elektrobleche.

Das Kühlelement, insbesondere der Kühlmantel, kann beispielsweise zur Flüssigkeitskühlung oder Wasserkühlung ausgestaltet sein.

Gemäß einem weiteren unabhängigen Aspekt des verbesserten Konzepts wird auch eine elektrische Maschine, insbesondere ein Generator oder ein Motor, angegeben. Die elektrische Maschine weist eine Maschinenkomponente gemäß dem verbesserten Konzept auf.

Gemäß einem weiteren unabhängigen Aspekt des verbesserten Konzepts wird ein Verfahren zur Herstellung eines Elektroblechs für eine elektrische Maschine angegeben. Gemäß dem Verfahren wird eine erste Platte aus einem ferromagnetischen Material additiv, also unter Einsatz eines oder mehrerer Schritte zur additiven Fertigung oder eines Verfahrens zur additiven Fertigung, gefertigt. Danach wird eine fluiddicht mit der ersten Platte verbundene Randstruktur entlang eines Randes der ersten Platte additiv gefertigt. Danach wird eine zweite Platte aus einem ferromagnetischem Material, insbesondere demselben ferromagnetischen Material wie die erste Platte, additiv gefertigt, wobei die additive Fertigung derart erfolgt, dass die zweite Platte mit der Randstruktur entlang eines Randes der zweiten Platte fluiddicht verbunden wird. Gemäß dem Verfahren wird ein Fluid in einen Innenraum zwischen den beiden Platten eingebracht.

Die Fertigung der Platten und der Randstruktur erfolgt beispielsweise derart, dass ein Abstand zwischen den beiden Platten besteht. Der Abstand ist beispielsweise durch eine Höhe der Randstruktur definiert.

Die Randstruktur kann je nach Form der Platten und deren Rändern beispielsweise als eine zusammenhängende Randstruktur ausgebildet sein oder zwei oder mehrere räumlich getrennte Strukturen beinhalten.

Durch Verwendung der additiven Fertigungsverfahrensschritte ist es möglich, das Elektroblech effizient oder kostengünstig herzustellen. Zudem erlaubt die additive Fertigung, Platten mit einer Stärke herzustellen, die um ein Vielfaches geringer ist als eine Stärke beziehungsweise eine minimale Stärke gewalzter Bleche. Beispielsweise kann die Stärke der Platten im Bereich zwischen 50 µm und 200 µm liegen, insbesondere zwischen 100 µm und 150 µm. Mittels Walzverfahren können in der Regel keine Stärken geringer als 0,3 mm erreicht werden. Dadurch, dass sowohl die Randstruktur als auch die Platten additiv gefertigt werden, sind mit Vorteil keine weiteren, also über die Schritte zur additiven Fertigung hinausgehenden, Verbindungsschritte erforderlich, um die beiden Platten miteinander zu verbinden.

Erfindungsgemäß werden Stützstrukturen zwischen der ersten und der zweiten Platte additiv gefertigt, um einen Abstand zwischen den Platten zu gewährleisten.

Die Stützstrukturen können beispielsweise zusammen, insbesondere während gemeinsamer Fertigungsschritte, mit der Randstruktur gefertigt werden.

Mit Vorteil können die Stützstrukturen daher wie auch die Randstrukturen und die Bleche additiv und ohne zusätzliche Verbindungsschritte hergestellt werden.

Erfindungsgemäß werden die Stützstrukturen und die Randstruktur mittels eines Siebdruckverfahrens oder eines Schablonendruckverfahrens unter Verwendung einer gemeinsamen Maske oder einer gemeinsamen Schablone oder einem gemeinsamen Sieb gefertigt.

Bei dem Siebdruck oder Schablonendruckverfahren handelt es sich insbesondere um ein Sieb- oder Schablonendruckverfahren zur dreidimensionalen additiven Fertigung.

Die Herstellung mittels Siebdruck- oder Schablonendruckverfahren eignet sich besonders gut für die Herstellung von Gegenständen mit abgeschlossenen Hohlräumen wie beispielsweise einem Elektroblech gemäß dem verbesserten Konzept.

Solche Ausgestaltungen des Verfahrens erlauben eine besonders effiziente, schnelle und kostengünstige Fertigung des Elektroblechs, da die Verbindung der Platten und die Erzeugung der Stützstrukturen in gemeinsamen Schritten geschehen kann.

Gemäß zumindest einer Ausführungsform werden, insbesondere vor Fertigung der zweiten Platte, Kapillarstrukturen eingebracht, welche zum Unterstützen eines Transports des Fluids dienen.

Die Kapillarstrukturen, welche ein Kapillarsystem bilden, können beispielsweise eingefüllt oder ebenfalls additiv gefertigt werden, beispielsweise zusammen mit den Stützstrukturen und/oder der Randstruktur.

Gemäß zumindest einer Ausgestaltung werden die Platten mittels eines Siebdruckverfahrens oder eines Schablonendruckverfahrens gefertigt, wobei insbesondere für beide Platten eine gemeinsame weitere Maske oder weitere Schablone verwendet wird.

Gemäß verschiedener Ausgestaltungsformen sind daher nur zwei Schablonen, Siebe oder Masken erforderlich, um das Elektroblech herzustellen, nämlich eine Maske für die Fertigung der Randstruktur und optional der Stützstrukturen und/oder Kapillarstrukturen, und eine weitere Maske zur Fertigung der Platten.

Gemäß zumindest einer Ausführungsform beinhaltet das Verfahren nach der Fertigung der zweiten Platte einen Schritt zur Wärmebehandlung, insbesondere einen Sinterschritt.

Der Schritt zur Wärmebehandlung kann der insbesondere Erhöhung der Festigkeit oder Härte der verschiedenen Komponenten des Elektroblechs dienen. Außerdem kann durch das Sintern oder die Wärmebehandlung ein Binder, welcher beispielsweise bei den Verfahren zur additiven Fertigung eingesetzt wurde, ausgetrieben oder entfernt werden.

Gemäß zumindest einer Ausgestaltung wird nach der Fertigung der zweiten Platte eine Öffnung in einer Außenwand des Elektroblechs, insbesondere in einer der Platten oder der Randstruktur, erzeugt, beispielsweise gebohrt. Der Innenraum wird über die Öffnung evakuiert und nach dem Evakuieren wird das Fluid durch die Öffnung in den Innenraum eingebracht. Nach dem Einbringen des Fluids wird die Öffnung fluiddicht verschlossen.

Das Evakuieren ist beispielsweise als Erzeugen eines Drucks in dem Innenraum, der kleiner ist als der Umgebungsdruck des Elektroblechs, zu verstehen.

Weitere Ausführungsformen des Verfahrens zur Herstellung des Elektroblechs gemäß dem verbesserten Konzept ergeben sich unmittelbar aus den verschiedenen Ausgestaltungen des Elektroblechs, des Blechpakets oder der Maschinenkomponente gemäß dem verbesserten Konzept und jeweils umgekehrt.

Gemäß einem weiteren unabhängigen Aspekt des verbesserten Konzepts wird ein Computerprogramm mit Befehlen angegeben, welche bei Ausführung des Computerprogramms durch ein Computersystem eine Vorrichtung zur additiven Fertigung dazu veranlassen, ein Verfahren gemäß dem verbesserten Konzept durchzuführen.

Die Vorrichtung kann dabei eine bekannte Vorrichtung zur dreidimensionalen additiven Fertigung, insbesondere zum Durchführen dreidimensionaler Sieb- oder Schablonendruckverfahren sein. Die Vorrichtung kann beispielsweise das Computersystem beinhalten.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise nicht in verschiedenen Figuren wiederholt.

In den Zeichnungen zeigen:
- FIG 1: eine perspektivische Darstellung einer beispielhaften Ausführungsform eines Elektroblechs gemäß dem verbesserten Konzept;
- FIG 2: eine schematische Darstellung einer beispielhaften Ausführungsform einer Maschinenkomponente gemäß dem verbesserten Konzept;
- FIG 3: eine Querschnittsdarstellung des Elektroblechs aus FIG 1; und
- FIG 4: ein beispielhaftes Werkstück mit Stützstrukturen.

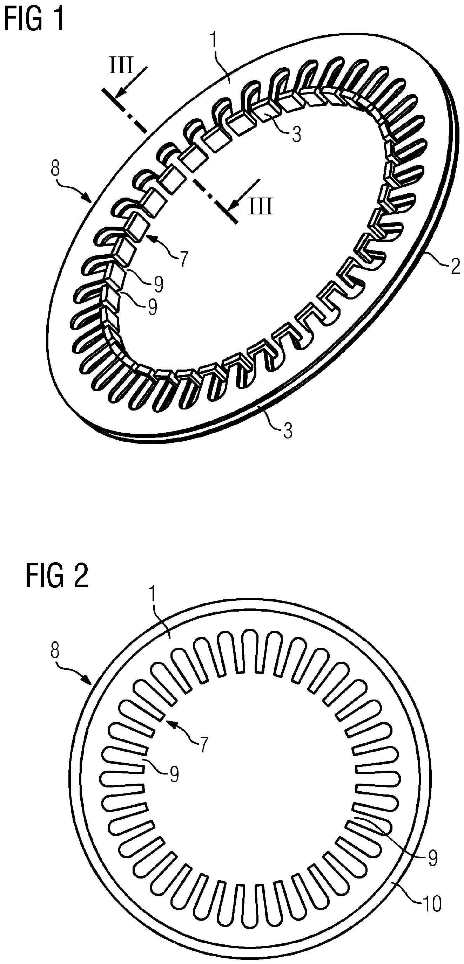

In FIG 1 ist eine beispielhafte Ausführungsform eines Elektroblechs gemäß dem verbesserten Konzept gezeigt.

Das Elektroblech weist eine erste Platte 1 auf, welche ringförmig ausgestaltet ist und auf einer Innenseite Nuten 9 zur Aufnahme von Leiterwicklungen der elektrischen Maschine aufweist. Das Elektroblech weist außerdem eine zweite Platte 2 auf, welche kongruent zur ersten Platte ausgebildet und angeordnet ist und in einem Abstand 5, insbesondere axialen Abstand, zu der ersten Platte 1 angeordnet ist.

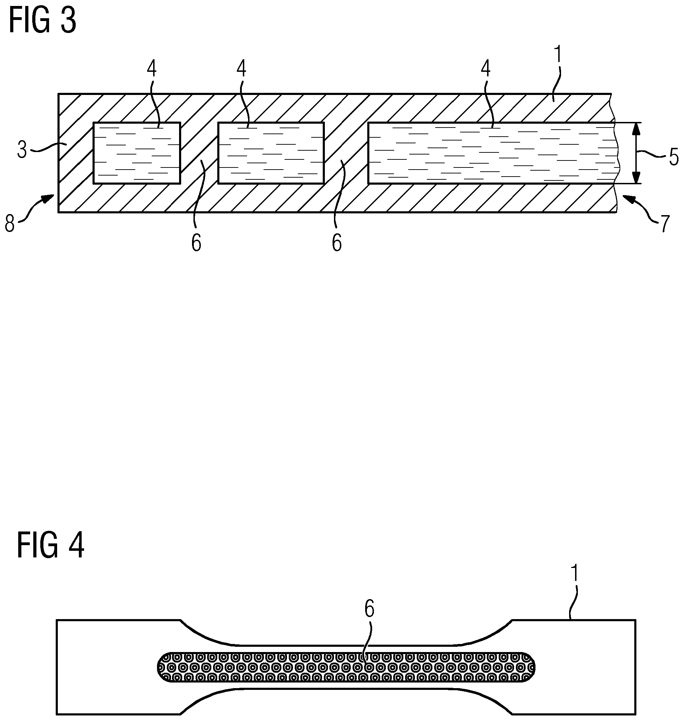

In FIG 3 ist ein entsprechender Querschnitt des Elektroblechs gezeigt, wobei eine Schnittachse in FIG 1 durch eine Strichpunktlinie angedeutet ist.

Das Elektroblech weist außerdem Randstrukturen 3 auf, welche die Platten 1, 2 an jeweiligen Innenrändern und Außenrändern der Platten umlaufend und vollständig, insbesondere fluiddicht, miteinander verbinden.

Ein Bereich, in dem sich die Nuten 9 befinden, also ein Innenbereich 7, des Elektroblechs entspricht einem Bereich, an dem das Elektroblech mit einer Wärmequelle, nämlich den im Betrieb der elektrischen Maschine erhitzten elektrischen Leiterwicklungen, in Verbindung stehen kann. Ein Außenbereich 8 des Elektroblechs kann, wenn das Elektroblech in der elektrischen Maschine verbaut ist, mit einer Wärmesenke, beispielsweise einem Kühlelement, in Kontakt stehen.

FIG 2 zeigt eine Maschinenkomponente, insbesondere einen Stator, einer elektrischen Maschine, welcher ein Elektroblech wie in FIG 1 gezeigt enthält. Des Weiteren enthält die Maschinenkomponente ein Kühlelement, insbesondere einen Kühlmantel 10, welcher insbesondere den Außenbereich 8 des Elektroblechs umgibt. Der Kühlmantel 10 kann beispielsweise wassergekühlt sein, um Wärme von dem Elektroblech aufzunehmen und abzutransportieren.

In einem Innenraum des Elektroblechs, welcher durch die beabstandete Anordnung der beiden Platten 1, 2 zueinander in dem Abstand 5 definiert wird, befindet sich ein Fluid 4, insbesondere Wasser beziehungsweise Wasserdampf.

Wie in FIG 3 gezeigt, kann das Elektroblech optional Stützstrukturen 6 aufweisen, welche zwischen der ersten Platte 1 und der zweiten Platte 2 angeordnet sind und diese abstützen, insbesondere den Abstand 5 gewährleisten. Dies ist insbesondere vorteilhaft, wenn in dem Innenraum des Elektroblechs ein Unterdruck bezüglich eines Umgebungsdrucks des Elektroblechs herrscht.

Zur weiteren Veranschaulichung ist in FIG 4 ein Werkstück gezeigt, welches ebenfalls eine Platte 1 aufweist, die zu Darstellungszwecken geöffnet ist, damit Stützstrukturen 6 sichtbar sind, wie sie beispielsweise auch in einem Elektroblech gemäß der FIG 1 und 3 eingesetzt werden können.

Insbesondere kann es sich bei den Stützstrukturen 6 um eine Anordnung, beispielsweise regelmäßige Anordnung, von stabförmigen, quaderförmigen, rohrförmigen oder prismenförmigen Strukturen handeln, die zwischen den Platten 1, 2 angeordnet sind und beispielsweise mit denen stoffschlüssig und fluiddicht verbunden sind.

In dem gezeigten Beispiel der FIG 1 bis 3 kann es sich bei dem Fluid 4 beispielsweise um Wasser oder Wasserdampf handeln. Der Innenraum des Elektroblechs kann beispielsweise auf einen Druck von etwa 50 hPa oder einen anderen Druck, beispielsweise im Bereich zwischen 10 und 100 hPa, evakuiert sein.

Im Betrieb der elektrischen Maschine entsteht insbesondere durch die Leiterwicklungen Wärme, welche, um eine Überhitzung der elektrischen Maschine zu verhindern, abtransportiert werden muss. Das Elektroblech gemäß dem verbesserten Konzept wirkt beispielsweise ähnlich wie eine Heatpipe. An dem Innenbereich 7 des Elektroblechs wird das Fluid 4 durch die erhitzten Leitungswicklungen ebenfalls erhitzt, verdampft und nimmt dadurch Energie in Form von Wärme auf. Im gasförmigen Zustand kann das Fluid 4 dann beispielsweise an die Außenseite beziehungsweise den Außenbereich 8 des Elektroblechs strömen, wo es beispielsweise durch den Kühlmantel 10 gekühlt wird, sodass es kondensiert und entsprechend Energie in Form von Wärme an das Wasser beziehungsweise den Kühlmantel 10 abgibt. Das kondensierte Fluid 4 kann dann, insbesondere unterstützt durch Kapillareffekte, die auf eine Rauigkeit, beispielsweise eine Oberflächenrauigkeit der Stützstrukturen 6 und/oder eine Rauigkeit der Platten 1, 2 zurückgehen, zu dem Innenbereich 7 zurückströmen, wo es erneut Wärme aufnehmen kann. Alternativ oder zusätzlich kann das Zurückströmen des Fluids 4 vom Außenbereich 8 zum Innenbereich 7 durch ein Kapillarsystem unterstützt werden (nicht gezeigt), welches sich in dem Innenraum des Elektroblechs befinden kann.

Ein Elektroblech gemäß dem verbesserten Konzept ist beispielsweise aufgebaut aus einem Boden, einem Deckel und einer inneren Hohlstruktur. Die Hohlstruktur ist dabei ein gas- und flüssigkeitsdichter Hohlraum, der in verschiedenen Ausführungsformen Strukturen zum Unterstützen des Gastransports an einer Wärmequelle zu einer Wärmesenke und/oder einen kapillaren Flüssigkeitstransport von der Wärmesenke zu der Wärmequelle unterstützen. Die Strukturen oder weitere Strukturen können zudem als Stützstrukturen dienen, die den Hohlraum bezüglich äußerer Kräfte stabilisieren.

Durch das verbesserte Konzept wird daher die Wärmeleitfähigkeit des Elektroblechs von einem relativ geringen Wert des ferromagnetischen Materials auf eine sehr hohe Wärmeleitfähigkeit bis über 1000 W/(K*m) erhöht. Zudem wird durch das additive Fertigungsverfahren ein kostengünstiger und effizienter Weg angegeben, das Elektroblech herzustellen.

Gemäß dem verbesserten Konzept kann insbesondere auf teure und aufwendige und gegebenenfalls für kleine elektrische Maschinen ungeeignete Flüssigkeitskühlung direkt in den Leitungen der Leiterwicklungen oder auf zusätzliche Kühlung der Nuten verzichtet werden. Auch Abstriche bei der Kupfernutfüllung sind gegebenenfalls nicht erforderlich.

## Patentansprüche

1. Elektroblech für eine elektrische Maschine, mit
- zwei Platten (1, 2) aus einem ferromagnetischen Material, welche parallel zueinander und in einem Abstand (5) zueinander angeordnet sind, wobei die Platten (1, 2) an jeweiligen Rändern umlaufend fluiddicht miteinander verbunden sind; und
- einem Fluid (4) in einem durch den Abstand gebildeten Innenraum zwischen den beiden Platten (1, 2)
**gekennzeichnet dadurch,dass**
das Elektroblech eine oder mehrere Stützstrukturen (6) in dem Innenraum aufweist, welche die Platten (1, 2) abstützen, um den Abstand (5) zu gewährleisten.

2. Elektroblech nach Anspruch 1, wobei ein Druck in dem Innenraum geringer ist als ein Umgebungsdruck des Elektroblechs.

3. Elektroblech nach Anspruch 1 oder 2, wobei der Innenraum derart ausgestaltet ist, dass sich das Fluid (4), wenn es sich in einem gasförmigen Zustand befindet, von einem ersten Bereich (7) des Innenraums zu einem zweiten Bereich (8) des Innenraums strömen kann.

4. Elektroblech nach Anspruch 3, wobei der Innenraum derart ausgestaltet ist, dass das Fluid (4), wenn es sich in einem flüssigen Zustand befindet, von dem zweiten Bereich (8) zu dem ersten Bereich (7) strömen kann.

5. Elektroblech nach einem der Ansprüche 3 oder 4, das in dem Innenraum ein Kapillarsystem enthält, das zwischen dem ersten Bereich (7) und dem zweiten Bereich (8) angeordnet ist.

6. Elektroblech nach einem der Ansprüche 1 bis 5, wobei die Platten (1, 2) ringförmig ausgebildet sind und Nuten (9) zur Aufnahme von Leiterwicklungen der elektrischen Maschine aufweisen.

7. Blechpaket für eine elektrische Maschine, welches aufeinander gestapelte Elektrobleche beinhaltet, wobei wenigstens eines der Elektrobleche gemäß einem der vorangehenden Ansprüche ausgestaltet ist.

8. Maschinenkomponente für eine elektrische Maschine, die Maschinenkomponente aufweisend
- ein Elektroblech gemäß einem der Ansprüche 1 bis 6;
- ein Kühlelement (10), welches mit dem Elektroblech in Verbindung steht, so dass ein Wärmeaustausch zwischen dem Elektroblech und dem Kühlelement stattfinden kann.

9. Verfahren zur Herstellung eines Elektroblechs für eine elektrische Maschine,
**gekennzeichnet durch** folgende Schritte:
- additive Fertigung einer ersten Platte (1) aus einem ferromagnetischen Material;
- additive Fertigung einer fluiddicht mit der ersten Platte (1) verbundenen Randstruktur (3) entlang eines Randes der ersten Platte;
- additive Fertigung einer zweiten Platte (2) aus einem ferromagnetischen Material, die mit der Randstruktur (3) entlang eines Randes der zweiten Platte fluiddicht verbunden ist; und
- Einbringen eines Fluids (3) in einen Innenraum zwischen den beiden Platten (1, 2),
- wobei Stützstrukturen (6) zwischen der ersten Platte (1) und der zweiten Platte (2) additiv gefertigt werden, um einen Abstand (5) zwischen den Platten (1, 2) zu gewährleisten,
- und wobei die Randstruktur (3) mittels eines Siebdruckverfahrens unter Verwendung einer gemeinsamen Maske oder mittels eines Schablonendruckverfahrens unter Verwendung einer gemeinsamen Schablone gefertigt werden.

10. Verfahren nach Anspruch 9, wobei die Platten (1, 2) mittels eines Siebdruckverfahrens oder Schablonendruckverfahrens gefertigt werden.

11. Verfahren nach Anspruch 9 oder 10, wobei nach der Fertigung der zweiten Platte (2)
- eine Öffnung in einer der Platten (1, 2) oder der Randstruktur (3) erzeugt wird;
- der Innenraum über die Öffnung evakuiert wird;
- das Fluid (4) nach dem Evakuieren durch die Öffnung in den Innenraum eingebracht wird; und
- die Öffnung nach dem Einbringen des Fluids (4) fluiddicht verschlossen wird.

12. Computerprogramm mit Befehlen, welche bei Ausführung des Computerprogramms durch ein Computersystem eine Vorrichtung zur additiven Fertigung dazu veranlassen, ein Verfahren gemäß einem der Ansprüche 9 bis 11 durchzuführen.

## Claims

1. Electrical sheet for an electric machine,
with
- two plates (1, 2) made of a ferromagnetic material, which are arranged parallel to one another and at a distance (5) from one another, wherein the plates (1, 2) are connected to one another at respective edges circumferentially in a fluid-tight manner; and
- a fluid (4) in an interior between the two plates (1, 2) formed by the distance
**characterised in that** the electrical sheet has one or more support structures (6) in the interior, which support the plates (1, 2), in order to guarantee the distance (5).

2. Electrical sheet according to claim 1, wherein a pressure in the interior is lower than an ambient pressure of the electrical sheet.

3. Electrical sheet according to claim 1 or 2, wherein the interior is embodied in such a way that the fluid (4), when it is in a gaseous state, can flow from a first area (7) of the interior to a second area (8) of the interior.

4. Electrical sheet according to claim 3, wherein the interior is embodied in such a way that the fluid (4), when it is in a liquid state, can flow from the second area (8) to the first area (7).

5. Electrical sheet according to one of claims 3 or 4, which contains a capillary system in the interior, which is arranged between the first area (7) and the second area (8).

6. Electrical sheet according to one of claims 1 to 5, wherein the plates (1, 2) are embodied in an annular shape and have slots (9) for accommodating conductor coils of the electric machine.

7. Laminated core for an electric machine, which includes electrical sheets stacked on one another, wherein at least one of the electrical sheets is embodied according to one of the preceding claims.

8. Machine component for an electric machine, the machine component having
- an electrical sheet according to one of claims 1 to 6;
- a cooling element (10), which is connected to the electrical sheet, so that an exchange of heat can take place between the electrical sheet and the cooling element.

9. Method for producing an electrical sheet for an electric machine,
**characterised by** the following steps:
- additive manufacturing of a first plate (1) from a ferromagnetic material;
- additive manufacturing of an edge structure (3) connected in a fluid-tight manner to the first plate (1) along an edge of the first plate;
- additive manufacturing of a second plate (2) from a ferromagnetic material, which is connected to the edge structure (3) along an edge of the second plate in a fluid-tight manner; and
- introduction of a fluid (3) into an interior between the two plates (1, 2),
- wherein support structures (6) between the first plate (1) and the second plate (2) are additively manufactured, in order to guarantee a distance (5) between the plates (1, 2),
- and wherein the edge structure (3) is manufactured by means of a screen printing method using a common mask or by means of a stencil printing method using a common stencil.

10. Method according to claim 9, wherein the plates (1, 2) are manufactured by means of a screen printing method or stencil printing method.

11. Method according to claim 9 or 10, wherein, after the manufacturing of the second plate (2)
- an opening is created in one of the plates (1, 2) or in the edge structure (3);
- the interior is evacuated via the opening;
- the fluid (4) is introduced through the opening into the interior after the evacuation; and
- the opening is sealed in a fluid-tight manner after the introduction of the fluid (4).

12. Computer program with commands that, when the computer program is executed by a computer system, cause an apparatus for additive manufacturing to carry out a method according to one of claims 9 to 11.

## Revendications

1. Tôle électrique d'une machine électrique,
comprenant
- deux plaques (1, 2) en un matériau ferromagnétique, qui sont disposées parallèlement l'une à l'autre et à une distance (5) l'une de l'autre, dans laquelle les plaques (1, 2) sont reliées entre elles, d'une manière étanche au fluide, tout autour sur des bords respectifs, et
- un fluide (4) dans un espace intérieur formé par la distance entre les deux plaques (1, 2),
**caractérisée en ce que**
la tôle électrique a, dans l'espace intérieur, une ou plusieurs structures (6) d'appui, sur lesquelles les plaques (1, 2) s'appuient pour assurer la distance (5).

2. Tôle électrique suivant la revendication 1, dans laquelle une pression dans l'espace intérieur est plus basse qu'une pression ambiante autour de la tôle électrique.

3. Tôle électrique suivant la revendication 1 ou 2, dans laquelle l'espace intérieur est conformé, de manière à ce que le fluide (4), s'il se trouve dans un état gazeux, puisse passer d'une première partie (7) de l'espace intérieur à une deuxième partie (8) de l'espace intérieur.

4. Tôle électrique suivant la revendication 3, dans laquelle l'espace intérieur est conformé, de manière à ce que le fluide (4), s'il se trouve dans un état liquide, puisse passer de la deuxième partie (8) à la première partie (7).

5. Tôle électrique suivant l'une des revendications 3 ou 4, qui contient, dans l'espace intérieur, un système capillaire, qui est disposé entre la première partie (7) et la deuxième partie (8).

6. Tôle électrique suivant l'une des revendications 1 à 5, dans laquelle les plaques (1, 2) sont constituées en forme d'anneau et ont des encoches (9) de réception d'enroulements conducteurs de la machine électrique.

7. Paquet de tôles d'une machine électrique, qui comporte des tôles électriques empilées les unes sur les autres, dans lequel au moins l'une des tôles électriques est conformée suivant l'une des revendications précédentes.

8. Composant de machine d'une machine électrique, le composant de machine comportant
- une tôle électrique suivant l'une des revendications 1 à 6 ;
- un élément (10) de refroidissement, qui est en liaison avec la tôle électrique, de manière à ce qu'un échange de chaleur puisse avoir lieu entre la tôle électrique et l'élément de refroidissement.

9. Procédé de fabrication d'une tôle électrique d'une machine électrique,
**caractérisé par** les stades suivants :
- fabrication additive d'une première plaque (1) en un matériau ferromagnétique ;
- fabrication additive, le long d'un bord de la première plaque (1), d'une structure (3) de bord reliée d'une manière étanche au fluide à la première plaque ;
- fabrication additive d'une deuxième plaque (2) en un matériau ferromagnétique, qui est reliée d'une manière étanche au fluide à la structure (3) de bord le long d'un bord de la deuxième plaque ; et
- introduction d'un fluide (3) dans un espace intérieur entre les deux plaques (1, 2),
- dans lequel on fabrique additivement des structures (6) d'appui entre la première plaque (1) et la deuxième plaque (2) pour assurer une distance (5) entre les plaques (1, 2),
- et dans lequel on fabrique la structure (3) de bord au moyen d'un procédé de sérigraphie en utilisant un masque commun ou au moyen d'une procédé au pochoir en utilisant un pochoir commun.

10. Procédé suivant la revendication 9, dans lequel on fabrique les plaques (1, 2) au moyen d'un procédé de sérigraphie ou d'un procédé au pochoir.

11. Procédé suivant la revendication 9 ou 10, dans lequel, après la fabrication de la deuxième plaque (2),
- on produit une ouverture dans l'une des plaques (1, 2) ou de la structure (3) de bord ;
- on fait le vide dans l'espace intérieur par l'ouverture ;
- on introduit, dans l'espace intérieur, le fluide (4) après avoir fait le vide par l'ouverture ; et
- on ferme, d'une manière étanche au fluide, l'ouverture après l'introduction du fluide (4).

12. Programme d'ordinateur comprenant des instructions qui, lors de l'exécution du programme d'ordinateur par un système informatique, font qu'une installation de fabrication additive effectue un procédé suivant l'une des revendications 9 à 11.
